# EUROPEAN PATENT APPLICATION

(11) **EP 4 707 214 A1**
(43) Date of publication of application: **11.03.2026**
(21) Application number: 25194785.9
(22) Date of filing: 08.08.2025
(51) Int. Cl.: B66B 1/46, B66B 3/00

(54) **VOICE OVER FEATURE FOR ELEVATOR OPERATION**

(30) Priority: 29.08.2024 US 202418819627
(71) Applicant: Otis Elevator Company, Farmington, Connecticut 06032 (US)
(72) Inventor: Hsu, Arthur, Farmington, 03032 (US)
(74) Representative: Schmitt-Nilson Schraud Waibel Wohlfrom Patentanwälte Partnerschaft mbB

(57) **Abstract**

A personnel movement system is provided and includes a personnel movement element to transport passengers from one location to another, a controller configured to control operations of the personnel movement element in accordance with received signals and a touch screen interface operably disposed at an entrance/exit of the personnel movement element. The touch screen interface is operable in at least a first mode and a second mode to send the signals to the controller and is configured to be toggled therebetween.

## Description

The present disclosure relates to personnel movement systems and, in particular, to a voice over feature for operation of a personnel movement system such as an elevator system, an escalator system and a moving walkway system.

In an elevator system, in particular, an elevator shaft is built into a building and an elevator car travels up and down along the elevator shaft to arrive at landing doors of different floors of the building. The movement of the elevator is driven by a machine that is controlled by a controller according to instructions received from users of the elevator system. During operational conditions, passengers will typically arrive at an elevator landing in a building, press a call button and wait for the elevator to arrive. Once the elevator arrives and its doors open, the passenger will enter the elevator and select a destination floor. The doors close and the elevator travels upwardly or downwardly to the selected floor whereupon the passenger disembarks.

For passengers with special needs, using elevators, escalator and moving walkways often presents a challenge. Blind passengers may not be able to see the elevators, the escalators and the moving walkways, their respective landings or their respective buttons. Passengers with mobility problems may not be able to enter and exit an elevator in time for the doors to open or close. Even for passengers who do not have special needs, it may be difficult to locate elevators, escalators and moving walkways in a given building, especially in cases in which only certain elevators, escalators and moving walkways service certain floors or other specified areas.

According to an aspect of the disclosure, a personnel movement system is provided and includes a personnel movement element to transport passengers from one location to another, a controller configured to control operations of the personnel movement element in accordance with received signals and a touch screen interface operably disposed at an entrance/exit of the personnel movement element. The touch screen interface is operable in at least a first mode and a second mode to send the signals to the controller and is configured to be toggled therebetween.

Particular embodiments further may include at least one, or a plurality of, the following optional features, alone or in combination with each other:

In accordance with additional or alternative embodiments, the first mode is a mode in which the touch screen is operated by being touched and the second mode is a voice mode in which the touch screen is operated by being touched, untouched and re-touched or by vocal command in response to an audible cue.

In accordance with additional or alternative embodiments, the personnel movement element is an elevator car and the touch screen interface includes a touch screen, first actuatable elements arrayed in the touch screen and a voice mode activator. The touch screen interface is operable in the second mode by the voice mode activator being actuated pressed or by vocal command.

In accordance with additional or alternative embodiments, the touch screen interface automatically switches back to operating in the first mode.

In accordance with additional or alternative embodiments, the controller continues to control operations of the personnel movement element to support a blind and/or visually impaired passenger following the touch screen interface automatically switching back to operating in the first mode.

In accordance with additional or alternative embodiments, one or more haptic indicators haptically point toward at least the voice mode activator.

In accordance with additional or alternative embodiments, a subset of the first actuatable elements includes floor actuatable elements and each of the floor actuatable elements is actuatable or pressable to initiate an elevator call with the touch screen interface operating in the first mode.

In accordance with additional or alternative embodiments, the personnel movement system further includes a speaker and, with the touch screen interface operating in the second mode, the speaker emits the audible cue as each of the first actuatable elements is touched.

According to an aspect of the disclosure, a personnel movement system is provided and includes a personnel movement element to transport passengers from one location to another, a controller configured to control operations of the personnel movement element in accordance with received signals and a touch screen interface operably disposed at an entrance/exit of the personnel movement element. The touch screen interface is operable in at least a first mode and a second mode to send the signals to the controller and being configured to be toggled therebetween, the first mode is characterized as a mode in which the touch screen is operated by being touched and the second mode is characterized as a voice mode to support use by a blind and/or visually impaired passenger in which the touch screen is operated by being touched, untouched and re-touched or by vocal command in response to an audible cue.

Particular embodiments further may include at least one, or a plurality of, the following optional features, alone or in combination with each other:

In accordance with additional or alternative embodiments, the personnel movement element is an elevator car and the touch screen interface includes a touch screen, first actuatable elements arrayed in the touch screen and a voice mode activator. The touch screen interface is operable in the second mode by the voice mode activator being actuated or pressed or by vocal command.

In accordance with additional or alternative embodiments, the touch screen interface automatically switches back to operating in the first mode.

In accordance with additional or alternative embodiments, the controller continues to control operations of the personnel movement element to support a blind passenger following the touch screen interface automatically switching back to operating in the first mode.

In accordance with additional or alternative embodiments, the personnel movement system further includes one or more haptic indicators to haptically point toward at least the voice mode activator.

In accordance with additional or alternative embodiments, a subset of the first actuatable elements includes floor actuatable elements and each of the floor actuatable elements is actuatable or pressable to initiate an elevator call with the touch screen interface operating in the first mode.

In accordance with additional or alternative embodiments, the personnel movement system further includes a speaker and, with the touch screen interface operating in the second mode, the speaker emits the audible cue as each of the first actuatable elements is touched.

According to an aspect of the disclosure, an elevator system is provided and includes an elevator car, a controller configured to control operations of the elevator car in accordance with received signals and a touch screen interface operably disposed at an entrance/exit of the elevator car. The touch screen interface is operable in at least a first mode and a second mode to send the signals to the controller and being configured to be toggled therebetween, the first mode is characterized as a mode in which the touch screen is operated by being touched and the second mode is characterized as a voice mode to support use by a blind and/or visually impaired passenger in which the touch screen is operated by being touched, untouched and re-touched or by vocal command in response to an audible cue.

Particular embodiments further may include at least one, or a plurality of, the following optional features, alone or in combination with each other:

In accordance with additional or alternative embodiments, the touch screen interface includes a touch screen, first actuatable elements arrayed in the touch screen, a voice mode activator and one or more haptic indicators to haptically point toward the voice mode activator. The touch screen interface is operable in the second mode by the voice mode activator being actuated or pressed or by vocal command and automatically switches back to operating in the first mode.

In accordance with additional or alternative embodiments, the controller continues to control operations of the personnel movement element to support a blind passenger following the touch screen interface automatically switching back to operating in the first mode.

In accordance with additional or alternative embodiments, a subset of the first actuatable elements includes floor actuatable elements and each of the floor actuatable elements is actuatable or pressable to initiate an elevator call with the touch screen interface operating in the first mode.

In accordance with additional or alternative embodiments, the personnel movement system further includes a speaker and, with the touch screen interface operating in the second mode, the speaker emits the audible cue as each of the first actuatable elements is touched.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2 is a schematic illustration of a touch screen interface in accordance with embodiments;
FIG. 3 is a graphical illustration of a passenger approaching an elevator bank in accordance with embodiments; and
FIG. 4 is a flow diagram illustrating an operational method of a touch screen interface in accordance with embodiments.

Blind people and people who have less than perfect vision can use smartphones and other touchscreen devices using various applications designed for people with eyesight problems or visual impairments. These include, but are not limited to, VoiceOver^{™} and TalkBack^{™} applications. Unlike a smartphone, public touch devices, such as those on elevators, escalators and moving walkways as well as those on certain kiosks and touchscreen products, may not have applications designed for people with eyesight problems or visual impairments installed therein and configured for the needs of each user. As such, it is necessary to make public touch devices intuitively usable for sighted and blind users.

Thus, as will be described below, a public touch device is provided with at least first and second modes that can be easily toggled between by a user. Typically, the user interface of the public touch device of an elevator system for example operates in a "non-voice mode" where actuating or pressing an actuatable element or button (hereinafter referred to as an "actuatable element") displayed on a screen directly sends a call message for a call of an elevator. For blind and/or visually impaired users, the touch screen can be accompanied by an extra "voice actuatable element" that, when actuated, switches the user interface to "voice mode" for the remainder of the transaction. There can also be provisions (e.g., tactile, verbal, etc.) to help the blind and/or visually impaired person find the voice actuatable element or that allow a disabled person to initiate and subsequently use the "voice mode" using a verbal command (i.e. "initiate voice mode," "voice mode please," etc.). Once in voice mode, touching the screen does not send a call immediately, but instead allows the user to move their finger on the screen, where the screen (which can be provided as a touch screen as described below) "reads" the actuatable element or cue that the user passes their finger over and/or to use further vocal commands. As an example, when the "voice mode" is in effect, in order to activate an actuatable element, the user lifts their finger and actuates or presses the same area a second time. After the transaction is completed (e.g., user has selected a floor) and confirmation feedback has been given to the user, the interface may automatically switch back to the non-voice mode. In addition, even after the voice mode transaction is completed, elevator controls may continue to support the blind and/or visually impaired user to the end of the elevator journey, such as by providing audio cues to find the correct elevator and by announcing an arrival at a destination.

An exemplary configuration of the public touch device for an elevator system for example includes a touch interface, a provision (e.g., an actuatable element and/or microphone) to toggle to "voice mode," a user interface with at least a non-voice mode where touching a displayed actuatable element directly activates the actuatable element and a voice mode where touching a displayed actuatable element reads the actuatable element, a user interface where, in voice mode, touching the same displayed actuatable element a second time activates the actuatable element and, optionally, a user interface which switches back to non-voice mode either after a transaction is completed or after a timeout or after a actuatable element is actuated or pressed.

The following description will relate to a case in which a personnel movement system is an elevator system in particular. This is being done for purposes of clarity and brevity and should not be interpreted as limiting the description or the following claims in any way. It is to be further understood that other personnel movement systems can include, but are not limited to, escalator systems and moving walkway systems, all of which would be readily apparent to persons of ordinary skill in the art without any undue experimentation. Thus, any reference in the following description should be interpreted as pertaining to an elevator system, an escalator system, a moving walkway system, a kiosk for uber calling, a train kiosk, another similar type of system and/or a general personnel movement system.

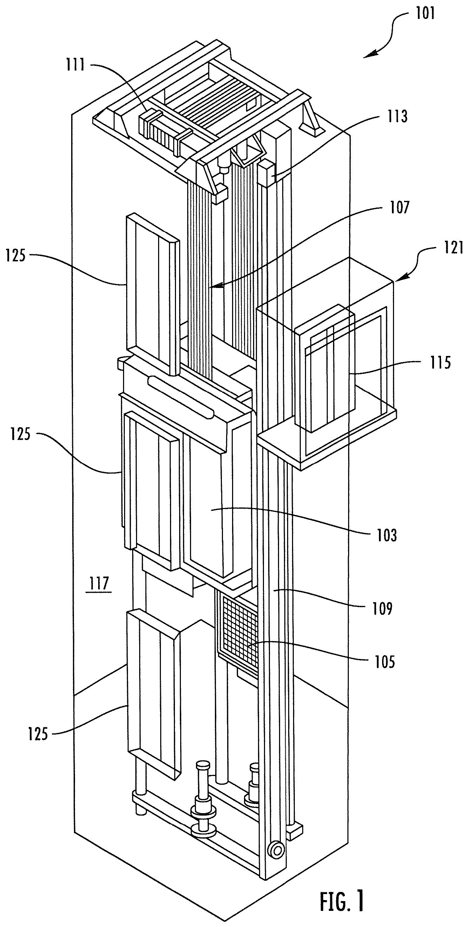

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor is a variable speed drive, which may be commonly referred to as a drive. As understood by those skilled in the art, the drive is comprised of several electrical circuits such as an inverter, rectification stage, filtering, and control circuitry towards the purpose of controlling the motor. The machine 111 may include a traction sheave that imparts force to tension member 107 to move the elevator car 103 within elevator shaft 117.

The elevator system 101 also includes one or more elevator doors. The elevator door may be integrally attached to the elevator car 103 or the elevator door may be located on a landing 125 of the elevator system 101, or both. Embodiments disclosed herein may be applicable to both an elevator door integrally attached to the elevator car 103 or an elevator door located on a landing 125 of the elevator system 101, or both. The elevator door opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars, escalator components and moving walkways equipped with friction wheels, pinch wheels or traction wheels). FIG. 1 is merely a non-limiting example presented for illustrative and explanatory purposes.

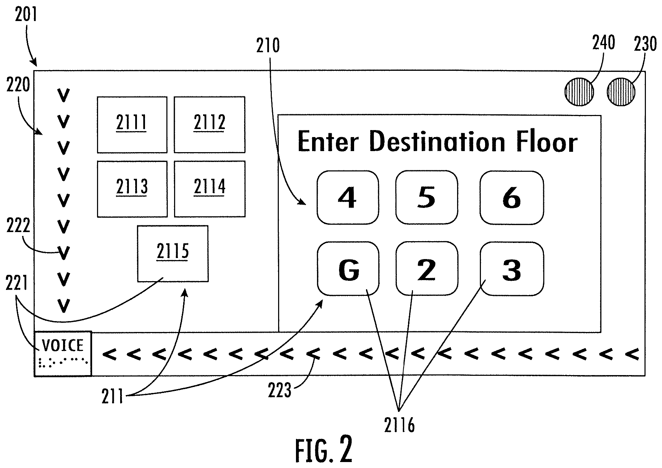

With continued reference to FIG. 1 and with additional reference to FIG. 2, a touch screen interface 201 is provided as a public touch device for use with a personnel movement system, such as the elevator system 101 of FIG. 1 including the controller 115, an escalator system and a moving walkway system. The touch screen interface 201 is normally operable in a first or non-voice mode, which can be, but is not required to be, a default setting for the touch screen interface 201, and in a second or voice mode for supporting use of the touch screen interface 201 by a blind and/or visually impaired passenger to send signals to the controller 115 by which the controller 115 controls operations of the elevator system 101 and the elevator car(s) 103 thereof. In the non-voice mode, actuating or pressing the "3" actuatable element for example sends a "floor 3" call to a controller, such as the controller 115 of FIG. 1. In the voice mode, a blind and/or visually impaired user hears an audible cue, such as an announcement of floor numbers as he/she moves his/her finger over the actuatable elements (e.g., "floor 3") or an announcement associated with any other actuatable element his/her finger moves over. If the blind and/or visually impaired user wants to call floor 3, he/she simply removes his/her finger from the selected actuatable element in response to the audible cue and subsequently retouches or actuates or presses that same area a second time.

As shown in FIG. 2, the touch screen interface 201 includes a touch screen 210 in which first actuatable elements 211 are arrayed, a bezel area 220 disposed about the touch screen 210 and, optionally, a speaker 230 and a microphone 240 that can be disposed in the bezel area 220 or in another area of the touch screen interface 201. The first actuatable elements 211 can include multiple types of actuatable elements including, but not limited to, a home actuatable element 2111, an access control actuatable element 2112, a menu actuatable element 2113, a user profile actuatable element 2114 and a help actuatable element 2115. A subset of the first actuatable elements 211 can also include a set of floor actuatable elements 2116. The touch screen interface 201 further includes a voice mode activator 221 that, when actuated or pressed or touched, instructs the touch screen interface 201 (and, in some cases, the elevator system 101 as a whole) to initiate or toggle to the voice mode. Haptic indicators 222, 223 can be disposed and configured to haptically guide the blind and/or visually impaired user's finger toward the voice mode activator 221 or toward another one of the actuatable elements and/or to provide a gentle nudge of the user's finger from a non-active area of the touch screen 210 and toward an active area of the touch screen 210.

In some cases, the haptic indicators 222, 223 can be supplemented with audible instructions as to how to operate the touch screen interface 201 (i.e., by announcement message such as "please select your destination floor by moving your finger over the screen until you hear your destination floor or kiosk function, and then lift your finger and press the button again."

In accordance with embodiments, the floor actuatable elements 211, the voice mode activator 221 and the one or more haptic indicators 222, 223 can be provided as actual tactile actuatable elements and/or as virtual actuatable elements that are displayed on the touch screen interface 201. In the latter case, in particular, an arrangement of the first actuatable elements 211, the voice mode activator 221 and the one or more haptic indicators 222, 223 can be varied and adjustable. For instance, in some but not all embodiments, the voice mode activator 221 and the haptic indicators 222, 223 can be disposed in the bezel area 220.

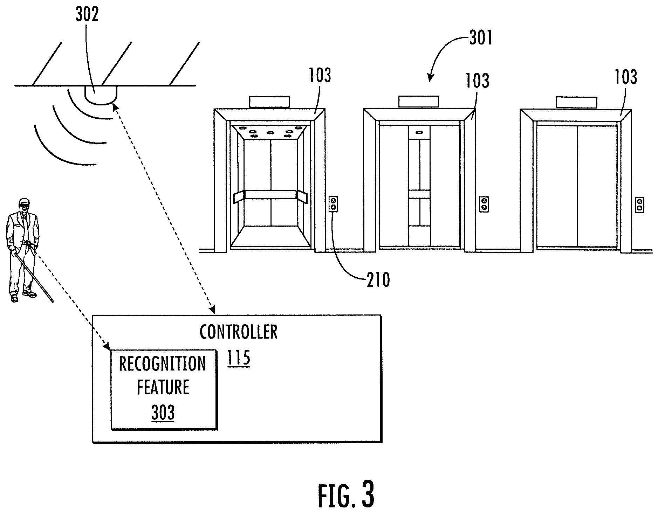

With continued reference to FIGS. 1 and 2 and with additional reference to FIG. 3, in certain cases, especially cases in which a user is registered with the elevator system 101 and has a user profile that identifies the user as blind and/or visually impaired, it may not be necessary for the user to actuate or press the voice mode activator 221 to enter the voice mode. As shown in FIG. 3, in these or other cases, the user can use vocal commands. Also, in these or other cases, as the user moves toward an elevator bank 301, the elevator system 101 of FIG. 1 recognizes the user's proximity to the elevator bank 301 using one or more detection features 302 and recognizes the user using one or more recognition features 303. The one or more detection features 302 can include, but are not limited to, LiDAR, RADAR, mmWave detection and optical detectors. The one or more recognition features 303 can include, but are limited to, facial recognition features and credential recognition features. In any case, once the user has been detected in proximity to the elevator bank 301 and identified as blind and/or visually impaired, the controller 115 of the elevator system 101 (see FIG. 1) may automatically instruct the touch screen 210 of FIG. 2 to initiate the voice mode without the voice mode activator 221 being actuated or pressed.

Typically or normally, the touch screen 210 operates in the non-voice mode, which may be, but is not required to be a default setting for sighted users. In the non-voice mode, the user actuates or presses one of the floor actuatable elements 2116 to send a call message to the controller 115 of FIG. 1 whereupon the controller 115 dispatches an elevator car 103. For blind and/or visually impaired users, the touch screen 210 operational mode can be switched or toggled to the voice mode by the user using the vocal commands or by the user actuating or pressing the voice mode activator 221 and, if necessary, following the one or more haptic indicators 222, 223 to the voice mode activator 221 and/or by the controller 115 of the elevator system 101 (see FIG. 1) automatically instructing the touch screen 210 to operate in the voice mode.

In any case, once the touch screen interface 201 is operating in the voice mode, touching the touch screen 210 (i.e., one of the floor actuatable element 2116) does not send a call immediately. Rather, the voice mode allows the user or passenger to move their finger along a surface of the touch screen 210 whereupon the touch screen 210 reads the floor actuatable element 2116 or any other actuatable element or cue that the user's finger passes over and the speaker 230 outputs an audible cue (i.e., an announcement of "floor 3" when the user's finger passes over the floor actuatable element 211 for floor 3 or another announcement associated with another actuatable element or with another area of the touch screen 210, such as where the user's finger passes over a welcome message). To activate a particular floor actuatable element 2116, the user lifts his/her finger in response to the audible cue and actuates or presses or retouches the same area a second time or can use a vocal command. After the transaction is completed (e.g., user has selected a floor) and confirmation feedback has been given to the user, the touch screen 210 may automatically switch back to the non-voice mode. Even after the voice mode transaction is completed, the controller 115 of the elevator system 101 may continue to instruct the elevator controls to support the blind and/or visually impaired user to the end of the elevator journey, such as by providing audio cues to find the correct elevator and by announcing an arrival at a destination.

In accordance with further embodiments, toggling to the voice mode can be accomplished by actuating or pressing the voice mode activator 221 and/or by voice command via the microphone 240. In addition, by way of the microphone 240, the user can virtually "explore" the touch screen interface 211. For example, a blind user may not know that there are two restaurant floors, say at floors 11 and 12, but by virtually "exploring" the touch screen interface 211 using voice commands via the microphone, the user may hear "floor 11, lower restaurant floor" when touching the 11th floor actuatable element and may hear "floor 12, upper restaurant floor" when touching the 12th floor actuatable element.

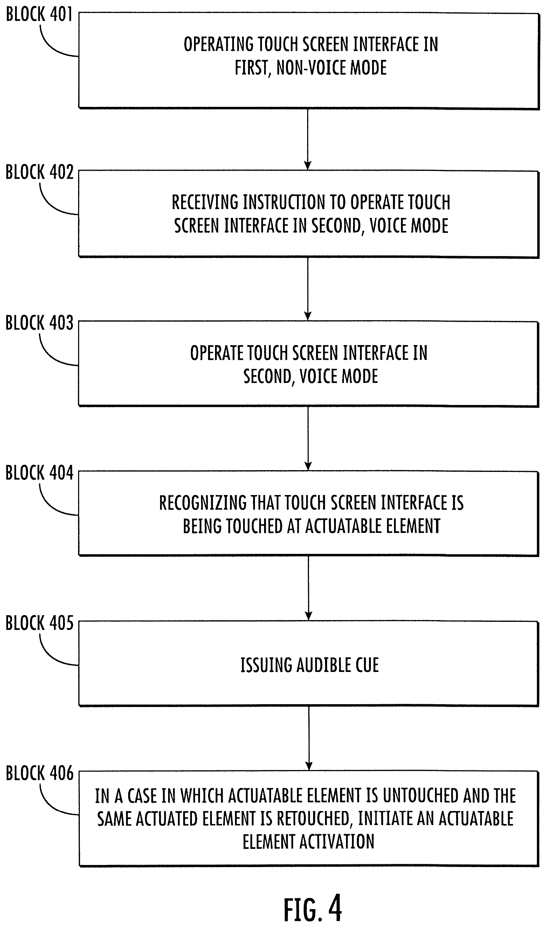

With reference to FIG. 4, an operational method 400 for a touch screen interface, such as the touch screen interface 201 of FIG. 2, is provided for use with a personnel movement system or an elevator system, such as the elevator system 101 of FIG. 1 and the controller 115. As shown in FIG. 4, the operational method 400 includes operating the touch screen interface in a first, non-voice mode (block 401), receiving an instruction to operate the touch screen interface in a second, voice mode by a user's touch or vocal command (block 402), operating the touch screen interface in the second, voice mode (block 403), recognizing that the touch screen interface is being touched at, for example, a floor actuatable element or that the user is inputting a command via vocal command (block 404), issuing an audible cue corresponding to the touched actuatable element or the vocal command (block 405) and, in a case in which the actuatable element being touched is a floor actuatable element or in a case in which the vocal command is a vocal call command, initiating a call in response to the touch screen interface being untouched at the floor actuatable element and retouched (block 406).

Technical effects and benefits of the present disclosure are the provision of a public touch device interface for elevator, escalator and/or moving walkway users that is intuitive for sighted users (with no change from current operation) and for blind and/or visually impaired users. The public touch device interface can be easily switched or toggled between at least two interface modes (i.e., the voice mode and the non-voice mode).

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A personnel movement system, comprising:
a personnel movement element to transport passengers from one location to another;
a controller configured to control operations of the personnel movement element in accordance with received signals; and
a touch screen interface operably disposed at an entrance/exit of the personnel movement element,
the touch screen interface being operable in at least a first mode and a second mode to send the signals to the controller and being configured to be toggled therebetween.

2. The personnel movement system according to claim 1, wherein:
the first mode is a mode in which the touch screen is operated by being touched, and
the second mode is a voice mode in which the touch screen is operated by being touched, untouched and re-touched or by vocal command in response to an audible cue.

3. The personnel movement system according to claim 2, wherein the personnel movement element is an elevator car and the touch screen interface comprises:
a touch screen;
first actuatable elements arrayed in the touch screen; and
a voice mode activator,
wherein the touch screen interface is operable in the second mode by the voice mode activator being actuated pressed or by vocal command.

4. The personnel movement system according to claim 3, wherein the touch screen interface automatically switches back to operating in the first mode.

5. The personnel movement system according to claim 4, wherein the controller continues to control operations of the personnel movement element to support a blind and/or visually impaired passenger following the touch screen interface automatically switching back to operating in the first mode.

6. The personnel movement system according to any of claims 3 to 5, further comprising one or more haptic indicators to haptically point toward at least the voice mode activator.

7. The personnel movement system according to any of claims 3 to 6, wherein a subset of the first actuatable elements comprises floor actuatable elements and each of the floor actuatable elements is actuatable or pressable to initiate an elevator call with the touch screen interface operating in the first mode.

8. The personnel movement system according to any of claims 3 to 7, further comprising a speaker,
wherein with the touch screen interface operating in the second mode, the speaker emits the audible cue as each of the first actuatable elements is touched.

9. The elevator system according to any of claims 1 to 8, wherei:
the personal movement element is an elevator car;
the controller is configured to control operations of the elevator car in accordance with received signals; and
the touch screen interface is operably disposed at an entrance/exit of the elevator car, the touch screen interface being operable in at least a first mode and a second mode to send the signals to the controller and being configured to be toggled therebetween,
the first mode being characterized as a mode in which the touch screen is operated by being touched, and
the second mode being characterized as a voice mode to support use by a blind and/or visually impaired passenger in which the touch screen is operated by being touched, untouched and re-touched or by vocal command in response to an audible cue.

10. The elevator system according to claim 9, wherein the touch screen interface comprises:
a touch screen;
first actuatable elements arrayed in the touch screen;
a voice mode activator; and
one or more haptic indicators to haptically point toward the voice mode activator,
wherein the touch screen interface is operable in the second mode by the voice mode activator being actuated or pressed or by vocal command and automatically switches back to operating in the first mode.

11. The elevator system according to claim 9 or 10, wherein the controller continues to control operations of the personnel movement element to support a blind passenger following the touch screen interface automatically switching back to operating in the first mode.

12. The elevator system according to any of claims 9 to 11, wherein a subset of the first actuatable elements comprises floor actuatable elements and each of the floor actuatable elements is actuatable or pressable to initiate an elevator call with the touch screen interface operating in the first mode.

13. The personnel movement system according to any of claims 9 to 12, further comprising a speaker, wherein
with the touch screen interface operating in the second mode, the speaker emits the audible cue as each of the first actuatable elements is touched.
